# EUROPÄISCHE PATENTSCHRIFT

(11) **EP 2 852 737 B1**
(45) Veröffentlichungstag und Bekanntmachung des Hinweises auf die Patenterteilung: **05.12.2018**
(21) Anmeldenummer: 13720420.2
(22) Anmeldetag: 07.05.2013
(51) Int. Cl.: F01N 3/021

(54) **PARTIKELFILTER**
PARTICLE FILTER
FILTRE À PARTICULES

(30) Priorität: 11.05.2012 DE 102012207960
(43) Veröffentlichungstag der Anmeldung: 01.04.2015
(73) Patentinhaber: Eberspächer Exhaust Technology GmbH & Co. KG, 66539 Neunkirchen (DE)
(72) Erfinder: WERNI, Marcus, 71334 Waiblingen (DE); VYELYAYEV, Oleksander, 70437 Stuttgart (DE); EHRLER, Simon, 73770 Denkendorf (DE); SUMMERS, Andrew, 73770 Denkendorf (DE)
(74) Vertreter: BRP Renaud & Partner mbB Rechtsanwälte Patentanwälte Steuerberater
(86) Internationale Anmeldenummer: PCT/EP2013/059428
(87) Internationale Veröffentlichungsnummer: WO 2013/167556

(56) Entgegenhaltungen:
- EP-A1- 1 298 289
- EP-A1- 2 233 708
- WO-A1-2011/114823

## Beschreibung

Die vorliegende Erfindung betrifft einen Partikelfilter zum Filtern von Abgasen sowie einen Schalldämpfer mit einem derartigen Partikelfilter.

Partikelfilter dienen der Behandlung von Abgasen, die beispielsweise durch eine Brennkraftmaschine erzeugt werden. Hierbei werden mit Hilfe eines solchen Partikelfilters Partikel, wie beispielsweise Ruß und dergleichen, aus dem Abgas herausgefiltert, um das sodann behandelte Abgas anderweitig zu behandeln oder in die Umgebung abzugeben. Zum Filtern von Partikeln weist der Partikelfilter ein Filterelement auf, das üblicherweise fest in einem Gehäuse des Partikelfilters angeordnet ist. Ein solcher Partikelfilter kann hierbei Bestandteil einer Abgasbehandlungsvorrichtung zur Behandlung von Abgasen einer Brennkraftmaschine sein, die beispielsweise auch einen Katalysator, etwa zur Reduktion von Stickoxiden, umfasst. Durch das Filtern des Abgases tritt beim Filterelement ein Verschleiß auf, der insbesondere durch die Ablagerung besagter Partikel bedingt sein kann, von der das Filterelement trotz einer möglichen Regeneration in Form einer Verbrennung und dergleichen nicht befreit werden kann. Dieser Verschleiß kann die Effizienz des Filterelements verringern und zu einem Ausfall des Partikelfilters führen. Es ist daher notwendig, den Partikelfilter in vorgegebenen Abständen und/oder bei Bedarf auszutauschen. Hierbei können auch lediglich bestimmte Bestandteile des Partikelfilters, insbesondere das Filterelement ausgetauscht werden. Der Austausch der Bestandteile des Partikelfilters, insbesondere des Filterelements ist jedoch gewöhnlich mit einem großen Aufwand verbunden und nicht ohne weiteres möglich.

Ein solcher Partikelfilter ist beispielsweise aus der WO 92/18226 A1 bekannt. Dieser Partikelfilter weist ein Gehäuse und ein im Gehäuse angeordnetes Filterelement auf. Das Filterelement weist an axial gegenüberliegenden Seiten Endringe auf, die das Filterelement axial am Gehäuse abstützen. Dabei weist der Partikelfilter eine Abschlussplatte auf, die einen der Endringe an einem axialen Ende abstützt und am gegenüberliegenden axialen Ende mittels eines Stiftes und einer Mutter am Gehäuse fixiert ist.

In der EP 2 333 263 A1 ist ein Partikelfilter offenbart, der direkt an einer zugehörigen Brennkraftmaschine angeordnet ist. Ein Filterelement des Partikelfilters ist in einem Gehäuse angeordnet und mittels Halteelemente im Gehäuse fixiert. Ein ähnlicher Partikelfilter ist aus der WO 2011/114823 A1 bekannt.

Die EP 1 298 289 A1 hat einen Schalldämpfer mit einem Partikelfilter zum Gegenstand, der einen Außenmantel sowie einen im Außenmantel axialverschiebbaren Innenmantel aufweist. Der Schalldämpfer ist mit einem Deckel abgeschlossen. Der Innenmantel weist einen integral ausgebildeten Fortsatz auf, über den er einen Ring am Deckel abstützt.

Die vorliegende Erfindung beschäftigt sich mit dem Problem, für einen Partikelfilter der eingangs genannten Art, eine verbesserte oder zumindest eine andere Ausführungsform anzugeben, die sich insbesondere durch eine einfache Montage des Partikelfilters und/oder durch einen einfachen Austausch eines Filterelements des Partikelfilters und/oder durch eine erhöhte Dichtheit eines Gehäuses des Partikelfilters auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Filterelement eines Partikelfilters in einem Innenmantel anzuordnen und den Innenmantel in einem gehäusefesten Außenmantel radial abzustützen und axial bewegbar anzuordnen und mittels zumindest eines Abstützelementes im Außenmantel axial abzustützen, so dass der Partikelfilter einfach montierbar ist und/oder das Filterelement einfach austauschbar ist.

Dem Erfindungsgedanken entsprechend umfasst der Partikelfilter, der dem Filtern von Abgasen einer Brennkraftmaschine, insbesondere eines Kraftfahrzeuges, dient, den Innenmantel, den Außenmantel sowie das Filterelement und ein Gehäuse, wobei der Innenmantel im Außenmantel axial verschiebbar angeordnet ist. Ferner weist der Partikelfilter einen Deckel auf, der eine Montageöffnung des Gehäuses verschließt. Die Montageöffnung des Gehäuses ist insbesondere dafür vorgesehen, den Innenmantel mit darin angeordnetem Filterelement axial in den Außenmantel einzustecken und aus dem Mantel herauszuziehen. Der Außenmantel definiert an einer vom Deckel abgewandten Stirnseite einen Abgaseinlass zum Filterelement, so dass das zu filternde Abgas durch diesen Abgaseingang zum Filterelement gelangt. Ferner ist das Filterelement im Innenmantel abgestützt und vorzugsweise gehalten. Hierzu kann radial zwischen dem Filterelement und dem Innenmantel eine Lagermatte angeordnet sein, wobei die radiale Richtung senkrecht zu einer axialen Richtung verläuft, die entlang einer Längserstreckung des Partikelfilters bzw. des Innenmantels oder einer Hauptströmungsrichtung des Abgases im Filterelement verläuft. Der das Filterelement abstützende Innenmantel ist seinerseits radial am Außenmantel abgestützt, derart, dass der Innenmantel axial im Außenmantel bewegbar bzw. verschiebbar ist. Des Weiteren liegt der Innenmantel ausströmseitig des Filterelements, das heißt auf der vom Abgaseinlass abgewandten Seite, an einem Ring an. Zumindest ein solches Abstützelement stützt ferner den Ring zur Übertragung von Druckkräften axial am Deckel ab. Das heißt, dass der Ring und somit der Innenmantel und das Filterelement gegen axial in Richtung des Deckels wirkende Druckkräfte, die insbesondere durch die Strömung des Abgases verursacht sind, gesichert sind, insbesondere dadurch, dass der Deckel am Gehäuse angeordnet und mit diesem verbunden ist.

Zweckmäßig ist der Außenmantel fest im Gehäuse angeordnet, so dass der Innenmantel axial verschiebbar im Gehäuse angeordnet ist. Auf der vom Deckel abgewandten Seite und somit einströmseitig, kann eine entsprechende axiale Sicherung des Innenmantels entfallen, insbesondere weil das Filterelement und somit der Innenmantel durch die Strömung des Abgases in Richtung des Deckels gedrückt werden. Somit ist insgesamt eine einfache Montage des Partikelfilters erreicht und zudem eine einfache und sichere Abstützung des Ringes und somit des Innenmantels und des Filterelements zur Übertragung von Druckkräften axial am Deckel bzw. eine axiale Sicherung erreicht.

Bei bevorzugten Ausführungsformen können auch Zugkräfte vom Ring auf das Abstützelement übertragen werden. Hierbei sind Zugkräfte insbesondere entgegen der besagten Druckkräfte gerichtet und wirken daher insbesondere ebenfalls axial. Mit Hilfe der Übertragung von Zugkräften am Ring durch das Abstützelement soll insbesondere ein vereinfachtes Herausziehen des Filterelements aus dem Gehäuse erreicht werden. Hierzu ist der Ring ferner fest am Innenmantel angeordnet, wobei sowohl Ausführungsformen vorstellbar sind, bei denen der Ring als integraler Bestandteil des Innenmantels ausgebildet ist, als auch Ausführungsformen, bei denen der Ring auf beliebige Art mit dem Innenmantel fest verbunden, beispielsweise verschweißt oder verschraubt, ist. Der Ring radial kann ferner nach innen gerichtete Verbindungsabschnitte aufweisen, die jeweils der Verbindung des Ringes mit einem solchen zugehörigen Abstützelement dienen. Durch die feste Anordnung des Ringes am Innenmantel und durch die Befestigung des Abstützelementes am Ring zur Übertragung von Zugkräften kann, vorzugsweise bei entferntem Deckel, der Innenmantel mit dem Filterelement durch Ziehen am Abstützelement aus dem Außenmantel herausgezogen werden, so dass eine vereinfachte Herausnahme des Filterelements gegeben ist, die insbesondere dazu verwendet werden kann, das Filterelement, gegebenenfalls samt Innenmantel, bei Bedarf auszutauschen.

Bei bevorzugten Ausführungsformen umfasst das jeweilige Abstützelement eine Gewindestange, eine Mutter, eine Hutmutter sowie eine Buchse. Hierbei ist die Buchse fest am Deckel angeordnet und durchsetzt den Deckel, während die Gewindestange durch die Buchse verläuft und am Ring befestigt ist. Die Befestigung der Gewindestange am Ring kann beispielsweise mittels einer Verschraubung oder durch Verschweißen und dergleichen erfolgen. Die Mutter ist auf der vom Ring abgewandten Seite der Buchse auf die Gewindestange aufgeschraubt und axial an der Buchse abgestützt. Ferner überdeckt die Hutmutter die Mutter und das vom Ring entfernte freie Ende der Gewindestange und ist zudem mittels eines Außengewindes der Buchse, das auf einer vom Ring abgewandten Seite der Buchse ausgebildet ist, mit der Buchse verschraubt. Somit ist der Ring mittels des Abstützelementes zur Übertragung von Druckkräften axial am Deckel abgestützt. Hierzu kann die Gewindestange insbesondere in der Buchse mit der Buchse verschraubt sein. In diesem Fall dient die Mutter insbesondere als Kontermutter, wobei zudem die Gewindestange drehbar mit dem Ring verbunden ist oder der die Buchse drehbar im Deckel angeordnet ist. Mit Hilfe dieser Konstruktion ist es insbesondere auch möglich, den Innenmantel und damit das Filterelement vereinfacht aus dem Gehäuse herauszuziehen. So kann zunächst die Hutmutter von der Buchse abgeschraubt werden. Anschließend kann die Mutter derart gedreht werden, dass die Gewindestange den Ring und somit den Innenmantel und das Filterelement aus dem Außenmantel herauszieht. Danach kann der Deckel vom Gehäuse gelöst und das Filterelement bzw. der Innenmantel aus dem Gehäuse herausgenommen bzw. herausgezogen werden.

Bei einer alternativen Ausführungsform ist das freie Ende der Gewindestange an der dem Ring zugewandten Innenseite der Hutmutter axial abgestützt. Die axiale Abstützung des freien Endes der Gewindestange bewirkt dabei insbesondere eine Abstützung des Ringes am Deckel zur Übertragung von Druckkräften.

Der Innenmantel und der Außenmantel können zumindest bereichsweise radial voneinander beabstandet angeordnet sein, um insbesondere die Übertragung von Vibrationen vom Filterelement bzw. dem Innenmantel auf den Außenmantel und somit auf das Gehäuse zu verringern oder eine bessere thermische Isolierung zu gewährleisten. Somit kann das Abgas in den radial zwischen dem Innenmantel und dem Außenmantel ausgebildeten Hohlraum strömen und eine Dichtheit des Partikelfilters bzw. des Gehäuses verschlechtern bzw. verringern. Bei bevorzugten Ausführungsformen ist radial zwischen dem Innenmantel und dem Außenmantel zumindest ein Dichtungselement angeordnet, das insbesondere dem Verhindern der Strömung des Abgases zwischen dem Innenmantel und dem Außenmantel bzw. dem Abdichten einer entsprechenden Leckage dient. Hierbei kann ein solches Dichtungselement sowohl einströmseitig als auch ausströmseitig oder dazwischen radial zwischen dem Innenmantel und dem Außenmantel angeordnet sein. Auch sind Ausführungsformen vorstellbar, bei denen mehrere derartige Dichtungselemente radial zwischen dem Innenmantel ausströmseitig und/oder einströmseitig und/oder dazwischen angeordnet sind. Ein derartiges Dichtungselement kann insbesondere ringförmig oder ringsegmentförmig ausgebildet sein und dementsprechend entlang des Außenumfanges des Innenmantels bzw. des Innenumfanges des Außenmantels oder der Umfangsrichtung verlaufen.

Zweckmäßig weist ein derartiges Dichtungselement eine federnde Eigenschaft auf und ist insbesondere als Federelement ausgebildet, wobei das Dichtungselement bevorzugt radial federnd ausgestaltet ist. Hierbei wird das Dichtungselement bei der Montage radial vorgespannt und anschließende in den Hohlraum eingebracht. Die federnde Eigenschaft des Dichtungselements führt insbesondere dazu, dass sich das radial vorgespannte Dichtungselement bei Anordnung zwischen dem Innenmantel und den radial zwischen dem Innenmantel und dem Außenmantel ausgebildeten Hohlraum im zugehörigen Bereich gänzlich ausfüllt, um eine möglichst effiziente Abdichtung gegenüber der Strömung des Abgases durch den entsprechenden Bereich zu gewährleisten.

Prinzipiell kann ein solches Dichtungselement auf beliebige Art und Weise realisiert sein, sofern es eine Abdichtung des Hohlraumes radial zwischen dem Innenmantel und dem Außenmantel gewährleistet. Bei bevorzugten Ausführungsformen weist zumindest ein solches Dichtungselement eine Sicke auf. Dabei kann ein solches Dichtungselement eine beliebige Art einer solchen Sicke, insbesondere eine Halbsicke, eine Vollsicke oder eine Doppelsicke aufweisen. Das die Sicke aufweisende Dichtungselement hat insbesondere den Vorteil, dass es einerseits günstig herzustellen ist und andererseits eine vereinfachte Montage und eine ausreichende Abdichtung gewährleistet.

Alternativ oder zusätzlich sind Ausführungsformen denkbar, bei denen zumindest ein solches Dichtungselement ein Drahtgewebe aufweist oder als ein solches Drahtgewebe ausgebildet ist. Hierbei ist das Drahtgewebe zweckmäßig dicht ausgestaltet, um eine ausreichende Abdichtung und/oder eine hinreichende federnde Eigenschaft zu gewährleisten.

Vorzugsweise ist das jeweilige Dichtungselement derart ausgebildet bzw. ausgestaltet und/oder derart im Gehäuse montiert, dass es bei Herausnahme des Innenmantels bzw. des Filterelements und insbesondere beim Tausch des Filterelements und/oder des Innenmantels ebenfalls ausgetauscht werden kann.

Zweckmäßig weist der Partikelfilter einen Dichtungshalter zum Halten des Dichtungselements auf. Halten bedeuten hierbei insbesondere eine axiale Abstützung des zugehörigen Dichtungselements. Dabei kann der Dichtungshalter am Innenmantel angeordnet sein, so dass er direkt oder indirekt am Ring und dementsprechend am Deckel abgestützt ist und beim Herausziehen des Ringes und dementsprechend des Innenmantels aus dem Gehäuse ebenfalls aus dem Gehäuse gezogen werden kann. Dementsprechend kann der Dichtungshalter fest am Innenmantel angeordnet sein und beispielsweise mit dem Innenmantel verbunden oder am Innenmantel ausgebildet bzw. integral am Innenmantel ausgebildet sein. Alternativ oder zusätzlich kann der Dichtungshalter fest am Ring angeordnet sein und beispielsweise mit dem Ring verbunden und/oder am Ring ausgebildet, insbesondere integral ausgebildet, sein. Selbstverständlich können auch mehrere solcher Dichtungshalter vorgesehen sein, die jeweils gleich oder unterschiedlich ausgebildet bzw. ausgestaltet sind. Ferner kann der jeweilige Dichtungshalter ein solches zugehöriges Dichtungselement oder mehrere solche Dichtungselemente halten.

Zweckmäßig sind der Dichtungshalter und das zugehörige Dichtungselement komplementär ausgebildet. Insbesondere kann vorgesehen sein, dass der Dichtungshalter in einer Aufnahme des zugehörigen Dichtungselements eingreift und das Dichtungselement somit hält.

Die jeweilige Aufnahme des Dichtungselements kann durch eine entsprechende Ausnehmung im Dichtungselement realisiert sein. Auch sind Ausführungsformen vorstellbar, bei denen eine derartige Aufnahme durch eine entsprechende Form des Dichtungselements realisiert ist. So kann ein solches Dichtungselement zwei miteinander verbundene und parallel verlaufende Abschnitte aufweisen, die eine solche Aufnahme ausbilden.

Durch das Zusammenwirken des Dichtungshalters mit dem zugehörigen Dichtungselement kann eine zusätzliche axiale Sicherung des Innenmantels bzw. des Ringes bewirkt werden. Ebenso kann das jeweilige Dichtungselement eine radiale Abstützung des Innenmantels und/oder des Ringes, insbesondere am Außenmantel, bewirken.

Der Deckel kann im Allgemeinen die Montageöffnung des Gehäuses auf beliebige Art verschließen. Bei bevorzugten Ausführungsformen ist der Deckel mittels einer Schelle, die insbesondere als eine V-Schelle und/oder als eine V-BandSchelle ausgestaltet sein kann, mit einem Öffnungsrand verbunden, der die Montageöffnung einfasst. Somit kann die Montageöffnung durch ein entsprechendes Lösen der Schelle und somit ein Lösen des Deckels von der Montageöffnung bzw. vom Öffnungsrand freigegeben werden, um insbesondere das Filterelement und/oder den Innenmantel und/oder den Ring aus der Montageöffnung herauszuziehen.

Der die Montageöffnung zumindest bereichsweise einfassende Öffnungsrand ist vorzugsweise an einer relativ zum Außenmantel radial verlaufenden Außenwand des Gehäuses ausgebildet. Hierbei ist die Außenwand zweckmäßig am Außenmantel verbunden und insbesondere mit dem Außenmantel verschweißt.

Zum Auslassen des das Filterelement durchströmenden und aus dem Filterelement austretenden Abgases kann beispielsweise ein Auslasselement vorgesehen sein, das axial zwischen dem Deckel und dem Ring angeordnet ist. Ein solches Auslasselement ist bei bevorzugten Ausführungsformen als ein Hohlzylinder ausgebildet und derart ausgestaltet, dass es das axial aus dem Filterelement austretende Abgas radial auslässt. Hierzu können insbesondere radiale Auslassöffnungen vorgesehen sein. Das Auslasselement kann also insbesondere als eine Hülse ausgestaltet sein, die radiale Durchbrüche aufweist, welche besagten Auslassöffnungen entsprechen. Zum Leiten bzw. eingrenzen des aus dem Auslasselement ausströmenden Abgases kann insbesondere besagte Außenwand des Gehäuses dienen. Dabei ist die Außenwand insbesondere auf der dem Deckel zugewandten Seite des Auslasselements angeordnet und verläuft entlang des Außenumfanges des Auslasselementes. Zudem kann der Partikelfilter eine Innenwand aufweisen, die ebenfalls insbesondere der Leitung des aus den Auslassöffnungen des Auslasselementes ausströmenden Abgases dient und dabei auf einer vom Deckel abgewandten Seite des Auslasselementes angeordnet ist.

Die Innenwand verläuft hierbei vorzugsweise wie die Außenwand relativ zum Außenmantel radial und ist mit dem Außenmantel verbunden und insbesondere verschweißt. Somit wird mittels der Innenwand und der Außenwand ein Ausströmkanal ausgebildet, der das aus den Auslassöffnungen des Auslasselementes ausströmende Abgas radial nach außen leitet.

Bevorzugt ist der Innenmantel durch das Auslasselement axial herausziehbar. Auch ist der Ring zweckmäßig axial aus dem Auslasselement herausziehbar, so dass das Herausziehen des Ringes und somit des Innenmantels bzw. des Filterelements aus dem Gehäuse durch das Auslasselement nicht verhindert wird.

Die Abstützung des Auslasselementes kann insbesondere dadurch realisiert sein, dass das Auslasselement axial in den Öffnungsrand der Montageöffnung hineinragt und radial am Öffnungsrand abgestützt ist. Analog kann das Auslasselement auch im Außenmantel bzw. in der Innenwand oder eines axialen Abschnittes der Innenwand angeordnet sein. Das Auslasselement kann also insbesondere im Bereich der Außenwand und/oder der Innenwand radial abgestützt sein.

Das Auslasselement ist zweckmäßig relativ zum Außenmantel fixiert. Das heißt, dass das Auslasselement mit dem Außenmantel verbunden sein kann oder an der mit dem Außenmantel verbundenen Innenwand und/oder Außenwand verbunden ist. Bei bevorzugten Ausführungsformen ist das Auslasselement integral am Außenmantel ausgebildet, so dass die Verbindung der Innenwand und/oder der Außenwand mit dem Außenmantel mittels des Auslasselementes realisiert ist.

Es versteht sich, dass der Partikelfilter mehrere Abstützelemente aufweisen kann, die beliebig verteilt angeordnet sind. Zweckmäßig sind die jeweiligen Abstützelemente entlang der Umfangsrichtung gleichmäßig verteilt, um eine gleichmäßige Abstützung des Ringes und somit des Innenmantels bzw. des Filterelements zu gewährleisten. Insbesondere kann das jeweilige Abstützelement entlang des Innenumfanges des Innenmantels angeordnet sein, um insbesondere die Strömung des Abgases nicht zu beeinflussen und/oder um die Wechselwirkung des Abstützelementes mit dem Abgas zu minimieren.

Zweckmäßig ist der Ring derart ausgebildet, dass es eine möglichst reibungslose Strömung des Abgases ermöglicht. Dementsprechend weist der Ring eine möglichst geringe radiale Ausdehnung auf.

Zur Halterung des Ringes kann der Ring am Außenmantel abgestützt sein, wobei der Ring axial verschiebbar ist, um das Herausziehen des Ringes und somit des Innenmantels und/oder des Filterelements aus dem Gehäuse zu gewährleisten. Alternativ oder zusätzlich kann der Ring am Auslasselement radial abgestützt sein, wobei der Ring auch im Auslasselement axial verschiebbar ist.

Der Ring kann prinzipiell ein beliebiges Profil aufweisen, sofern er den Innenmantel direkt oder indirekt axial abstützt und durch das Abstützelement am Deckel abstützbar ist. So kann der Ring beispielsweise ein Z-Profil, ein S-Profil, ein L-Profil oder ein U-Profil aufweisen, wobei das Profil bezüglich eines Längsschnittes durch den Partikelfilter gegeben ist.

Ferner kann axial zwischen dem Ring und dem Filterelement zumindest bereichsweise ein Stützelement angeordnet sein, um das Filterelement axial am Ring abzustützen. Dabei ist das Stützelement bevorzugt derart ausgebildet bzw. ausgestaltet, dass es auch Vibrationen des Filterelements aufnehmen bzw. dämpfen kann. Auch der Ring kann derart ausgebildet bzw. ausgestaltet sein, dass es entsprechende Vibrationen des Filterelements bzw. des Innenmantels absorbieren bzw. dämpfen kann.

Zur Überprüfung der Dichtheit des Gehäuses kann ferner ein Leckagekanal vorgesehen sein, der den Außenmantel durchsetzt und insbesondere fluidisch mit dem radial zwischen dem Innenmantel und dem Außenmantel ausgebildeten Hohlraum verbunden ist. Dementsprechend kann ein Leckagetest zur Überprüfung der Dichtheit des Gehäuses dadurch erfolgen, dass Druckluft durch den Leckagekanal in dem Hohlraum eingebracht wird, um beispielsweise einen Haltedruck oder einen Druckverlust zu messen. Bei einer derartigen Leckageüberprüfung ist es jedoch erforderlich, dass einströmseitig und ausströmseitig des Leckagekanals zumindest ein solches Dichtungselement angeordnet ist.

Eine solche Überprüfung der Dichtheit des Gehäuses bzw. ein solcher Leckagetest kann insbesondere nach dem Austausch des Filterelements und/oder des Innenmantels erfolgen, während dem auch zumindest ein solches Dichtungselement ausgetauscht werden kann.

Die radiale Abstützung des Innenmantels am Außenmantel kann mit Hilfe von zumindest einer radial nach innen gerichteter Ausformung des Außenmantels erfolgen. Hierbei kann eine solche Ausformung entlang der gesamten Umfangsrichtung oder entlang eines Segmentes der Umfangsrichtung des Außenmantels verlaufen. Auch können mehrere derartige Ausformungen entlang der Umfangsrichtung auf gleicher axialer Höhe oder auf unterschiedlichen axialen Höhen angeordnet sein. Zudem kann die jeweilige Ausformung eine beliebige Form aufweisen und insbesondere symmetrisch oder unsymmetrisch ausgebildet sein. Eine derartige radiale Abstützung des Innenmantels am Außenmantel führt ebenfalls zu einer Reduzierung der Vibrationen des Innenmantels bzw. zu einer Dämpfung der Vibrationen des Innenmantels und/oder zu einer reduzierten Übertragung der Vibrationen des Innenmantels auf dem Außenmantel.

Es versteht sich, dass der erfindungsgemäße Partikelfilter zum Filtern des Abgases von Brennkraftmaschinen jeglicher Art benutzt werden kann. Insbesondere kann es sich bei den erfindungsgemäßen Partikelfiltern um einen Diesel-Partikelfilter für eine mit Diesel betriebene Brennkraftmaschine, insbesondere für ein Nutzfahrzeug, handeln.

Gemäß einer vorteilhaften Weiterbildung ist der erfindungsgemäße Partikelfilter Teil einer Abgasbehandlungsvorrichtung für eine Brennkraftmaschine.

Bei bevorzugten Ausführungsformen weist ein Schalldämpfer für eine Abgasanlage einer Brennkraftmaschine einen solchen Partikelfilter auf, wobei das Gehäuse des Partikelfilters durch einen Abschnitt eines Schalldämpfergehäuses des Schalldämpfers ausgebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch einen Schalldämpfer mit einem Partikelfilter,
- Fig. 2a - 2c: eine vergrößerte Darstellung des in Fig. 1 mit II bezeichneten Abschnittes, jeweils unterschiedlicher Ausführungsform,
- Fig. 3a - 3c: eine vergrößerte Darstellung des in Fig. 1 mit III bezeichneten Abschnitts, jeweils unterschiedlicher Ausführungsform,
- Fig. 4: einen Querschnitt durch einen Ring,
- Fig. 5: einen Längsschnitt durch einen Partikelfilter im Bereich eines Abstützelementes.

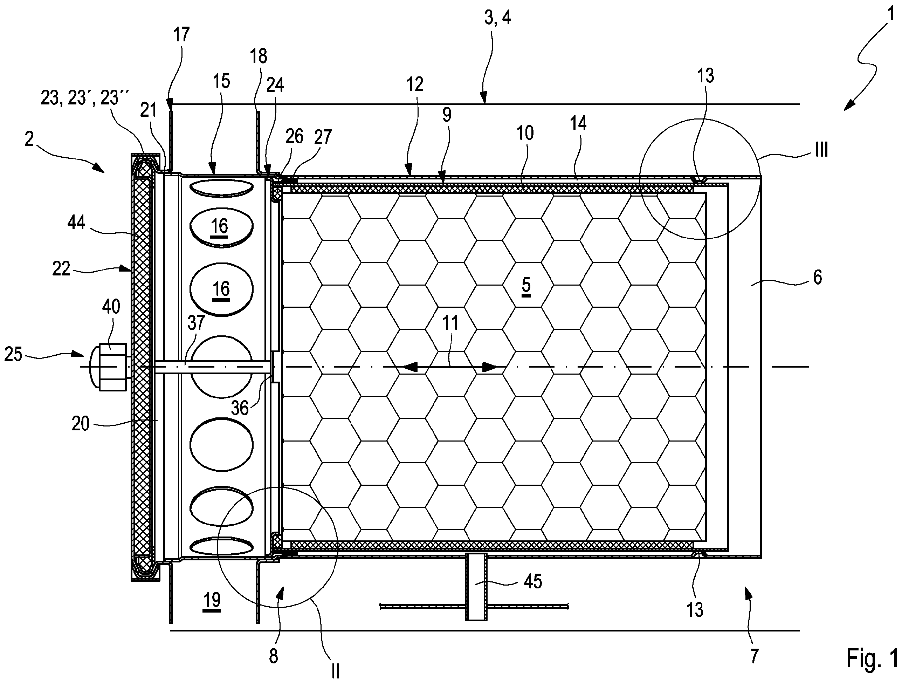

Fig. 1 zeigt einen Schalldämpfer 1 mit einem Partikelfilter 2, wobei ein Abschnitt eines Schalldämpfergehäuses 3 des Schalldämpfers 1 ein Gehäuse 4 des Partikelfilters 2 ausbildet. Der Partikelfilter 2 umfasst ein Filterelement 5, das von einem Abgas einer Brennkraftmaschine, beispielsweise eines Kraftfahrzeuges, insbesondere eines Nutzfahrzeuges, durchströmt wird, welches durch einen Abgaseinlass 6 des Partikelfilters 2 zum Filterelement 5 gelangt und darin von Partikeln wie beispielsweise Ruß befreit und dementsprechend gefiltert wird. Das Abgas strömt also auf einer Einströmseite 7 in das Filterelement 5 und auf einer Ausströmseite 8 aus dem Filterelement 5 wieder heraus. Das Filterelement 5 ist beispielsweise ein Keramik- oder ein anderes beliebiges Filterelement 5.

Das Filterelement 5 ist in einem Innenmantel 9 abgestützt bzw. gehalten, wobei radial zwischen dem Innenmantel 9 und dem Filterelement 5 eine Lagermatte 10 angeordnet ist. Hierbei verläuft die radiale Richtung senkrecht zu einer axialen Richtung 11, wobei die axiale Richtung 11 bezüglich der Längsausstreckung des Partikelfilters 2 bzw. des Innenmantels 9 oder der Hauptströmungsrichtung des Abgases im Filterelement 5 gegeben ist. Der Innenmantel 9 ist in einem gehäusefesten Außenmantel 12 axial verschiebbar angeordnet, wobei radial nach innen gerichtete Ausformungen 13 des Außenmantels 12 den Innenmantel 9 radial am Außenmantel 12 abstützen. Somit ist radial zwischen dem Innenmantel 9 und dem Außenmantel 12 ein Hohlraum 14 ausgebildet.

Der Außenmantel 12 weist auf seiner vom Abgaseinlass 6 abgewandten Seite ein hohlzylindrisch ausgebildetes Auslasselement 15 auf, das das axial aus dem Filterelement 15 herausströmende Abgas radial auslässt. Hierzu weist das Auslasselement 15 radial angeordnete Auslassöffnungen 16 auf. Ferner sind eine Au-ßenwand 17 und eine Innenwand 18 vorgesehen, die mit dem Auslasselement 15 und somit mit dem Außenmantel 12 verbunden, beispielsweise verschweißt, sind und relativ zum Außenmantel 12 radial verlaufen. Die Außenwand 17 und die Innenwand 18 umgeben dabei die Auslassöffnungen 16 des Auslasselementes 15, derart, dass die Innenwand 18 und die Außenwand 17 ein Strömungskanal 19 für das aus den Auslassöffnungen 16 ausströmende Abgas bilden, welcher das Abgas radial nach außen wegführen kann.

Auf der vom Abgaseinlass 6 abgewandten Seite weist der Partikelfilter 2 eine Montageöffnung 20 auf, die von einem Öffnungsrand 21 eingefasst ist, wobei der Öffnungsrand 21 an der Außenwand 17 ausgebildet ist. Ein Deckel 22 ist mittels einer Schelle 23, insbesondere einer V-Schelle 23' oder einer V-Bandschelle 23" mit dem Öffnungsrand 21 verbunden und verschließt somit die Montageöffnung 20.

Der Innenmantel 9 ist ausströmseitig und somit auf seiner vom Abgaseinlass 6 abgewandten Seite axial an einem Ring 24 abgestützt und mit dem Ring 24 fest verbunden. Zudem ist in dem in Fig. 1 gezeigten Schnitt ein Abstützelement 25 zu sehen, das den Ring 24 zur Übertragung von Druckkräften axial am Deckel 22 abstützt, wobei der Partikelfilter 2 bevorzugt zwei oder drei oder mehrere solche Abstützelemente 25 aufweist. Das heißt, dass das Abstützelement 25 und der Ring 24 derart miteinander verbunden und/oder aneinander angeordnet sind, dass axialer in Richtung des Deckels 22 wirkende Kräfte und somit Druckkräfte, die insbesondere durch die Strömung des Abgases entstehen, vom Ring 24 auf das Abstützelement 25 und somit auf den Deckel 22 übertragen werden. Somit sind der Ring 24 und dementsprechend der Innenmantel 9 und das Filterelement 5 gegen axialen Druckkräften am Deckel 22 abgestützt.

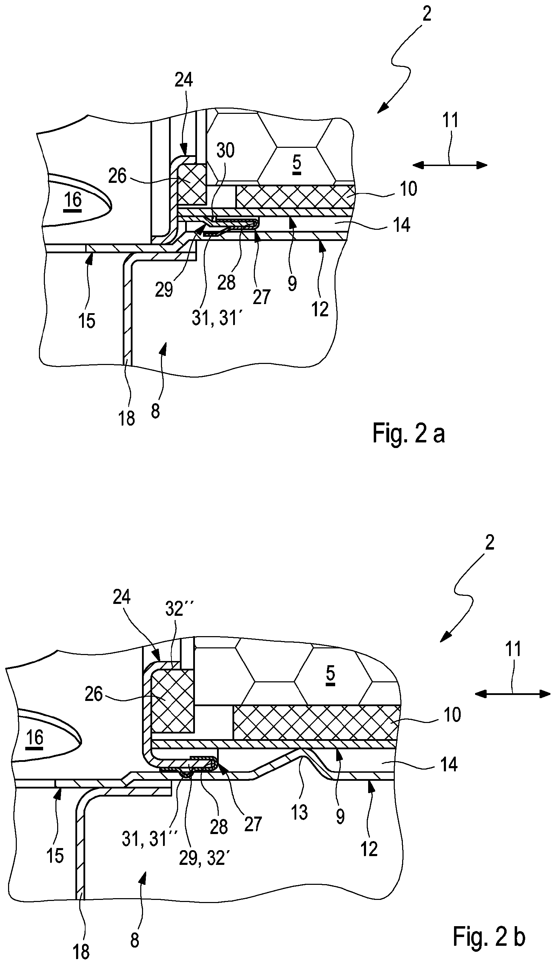

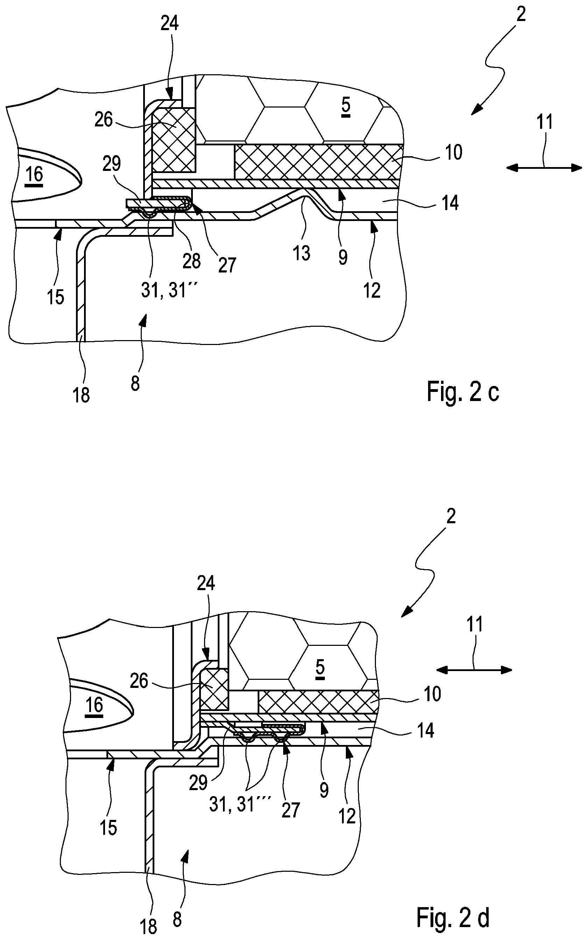

Die Figuren 2 zeigen eine vergrößerte Darstellung des in Fig. 1 mit II bezeichnete Abschnitts eines solchen Partikelfilters 2. Bei Fig. 2a ist zu sehen, dass der Ring 24 ein Z-förmiges bzw. S-förmiges Profil aufweist und auf der radial äußeren Seite radial am Außenmantel 12 bzw. am Auslasselement 15 abgestützt ist und axial im Außenmantel 12 bzw. im Auslasselement 15 verschiebbar ist. Auf der radial äußeren Seite umschließt der Ring 24 ein Stützelement 26, das axial zwischen dem Ring 24 und dem Filterelement 5 angeordnet ist. Im radial verlaufenden Abschnitt kontaktiert der Ring 24 den Innenmantel 9 und ist mit dem Innenmantel 9 verbunden. Ferner ist im radial zwischen dem Außenmantel 12 und dem Innenmantel 9 ausgebildeten Hohlraum 14 ein Dichtungselement 27 angeordnet, das radial federnd ausgebildet ist und im entspannten Zustand gezeigt ist. Das Dichtungselement 27 dient dem Zweck, die Strömung von durch den Abgaseinlass 6 in den Hohlraum 14 gelangenden Abgas zu verhindern und somit das Gehäuse 4 bzw. den Hohlraum 14 abzudichten. Das Dichtungselement 27 weist dabei eine Aufnahme 28 auf, die durch zwei in axialer Richtung 11 parallel verlaufende und miteinander verbundene Abschnitte des Dichtungselements 27 ausgebildet ist und in die ein Dichtungshalter 29 eingreift. Der Dichtungshalter 29 ist fest am Innenmantel 9 angeordnet, so dass das Dichtungselement 27 mittels des Dichtungshalters 29 axial gehalten ist. Ferner verschließt das Dichtungselement 27 im montierten bzw. verspannten Zustand, dass durch Einschieben des Dichtungshalters 29 in die Aufnahme 28 erreicht werden kann, den radialen Querschnitt des Hohlraums 14 im Bereich des Dichtungshalters 29 gänzlich. Zur Verstärkung des Dichtungshalters 29 ist ein radial verlaufender Steg 30 vorgesehen. Das in Fig. 2A gezeigte Dichtungselement 27 weist zudem eine Sicke 31 auf, die als Halbsicke 31' ausgebildet ist, so dass das Verspannen des Dichtungselements 27 bzw. die federnde Eigenschaft mittels der Sicke 31 erreicht werden kann.

In Fig. 2b ist eine alternative Ausführungsform gezeigt, bei der der Ring 24 ein U-Profil aufweist, wobei der radial äußere Schenkel 32' des Ringes 24 axial größer ausgebildet ist als der radial innere Schenkel 32". Ferner ist der Dichtungshalter 29 durch den radial äußeren Schenkel 32' des Ringes 24 ausgebildet. Zudem weist das Dichtungselement 27 eine solche Sicke 31 auf, die als Vollsicke 31" ausgebildet ist. Des Weiteren ist bei der in Fig. 2b gezeigten Ausführungsform im Gegensatz zur zuvor gezeigten Ausführungsform die axiale Abstützung des Innenmantels 9 am Außenmantel 12 alternativ oder zusätzlich ausströmseitig durch eine solche Ausformung 13 des Außenmantels 12 realisiert.

Bei der in Fig. 2c gezeigten Ausführungsform weist der Ring 24 im Gegensatz zur in Fig. 2b gezeigten Ausführungsform ein L-Profil auf, wobei der Dichtungshalter 29 an der radial äußeren Seite des Ringes 24 mit dem Ring verbunden ist. Bei den in Fig. 2b und 2c gezeigten Ausführungsformen erfolgt die radiale Abstützung des Ringes 24 am Innenmantel 9 bzw. am Auslasselement 15 also über das Dichtungselement 27 bzw. den Dichtungshalter 29.

Eine weitere Ausführungsform ist in Fig. 2d gezeigt, wobei sich diese Ausführungsform von der in Fig. 2a gezeigten Ausführungsform dadurch unterscheidet, dass das Dichtungselement 27 eine Doppelsicke 31"' als Sicke 31 aufweist. Dementsprechend ist der Dichtungshalter 29 axial größer ausgebildet.

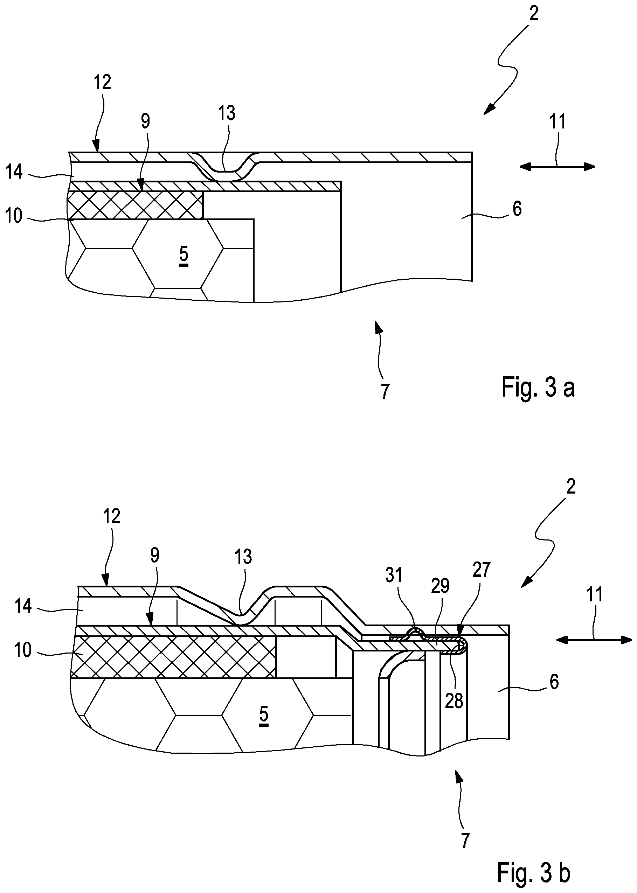

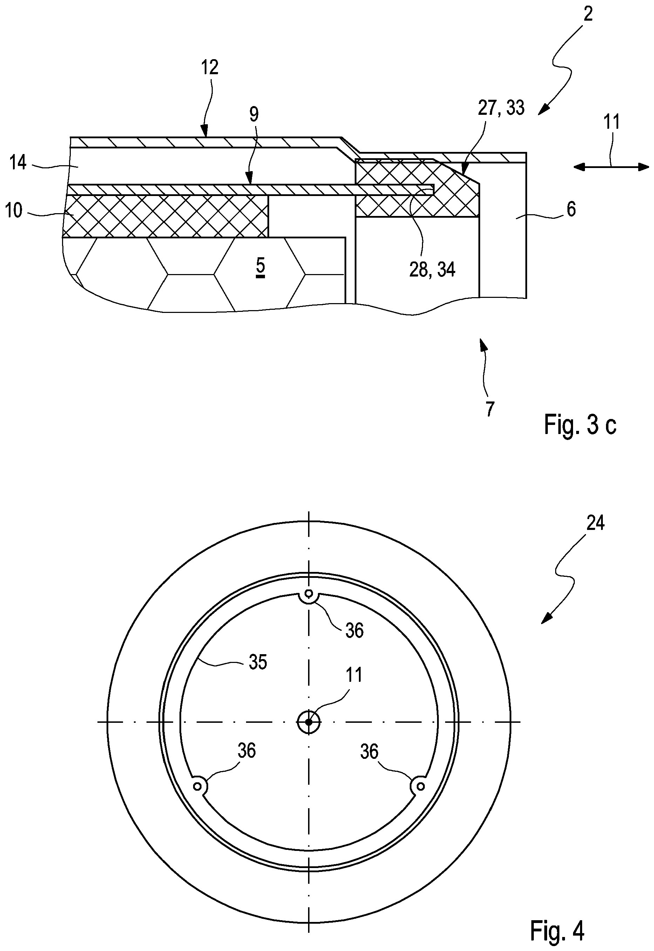

Die Figuren 3 zeigen eine vergrößerte Darstellung des in Fig. 1 mit III bezeichneten Ausschnittes eines solchen Partikelfilters 2. Dabei ist in Fig. 3a zu sehen, dass die Ausformung 13 des Außenmantels 12 zur radialen Abstützung des Innenmantels 9 nicht entlang des gesamten Umfanges des Außenmantels 12 verläuft. Zudem ist die Ausformung 13 in axialer Richtung 11 symmetrisch ausgebildet.

Fig. 3b zeigt im Gegensatz zur in Fig. 3a bzw. Fig. 1 gezeigten Ausführungsform ist ein solches Dichtungselement 27, dass zusätzlich oder alternativ einströmseitig radial zwischen dem Innenmantel 9 und dem Außenmantel 12 angeordnet ist. Das Dichtungselement 27 weist zudem eine Sicke 31 auf. Hierbei ist der Dichtungshalter 29 integral am Innenmantel 9 ausgebildet und durch eine radiale Verjüngung des Innenmantels 9 realisiert, wobei sich auch der Außenmantel 12 in diesem Bereich verjüngt, so dass das Dichtungselement 27 in diesem Bereich radial zwischen dem Innenmantel 9 und dem Außenmantel 12 angeordnet und von diesen eingeklemmt ist. Zudem ist die Ausformung 13 des Außenmantels 12 in axialer Richtung 11 unsymmetrisch ausgebildet.

Bei der in Fig. 3c gezeigten Ausführungsform ist das Dichtungselement 27 als Drahtgewebe 33 oder Drahtgeflecht 33 realisiert, wobei das Drahtgewebe 33 eine Ausnehmung 34 aufweist, die als Aufnahme 28 für den integral am Innenmantel 9 ausgebildeten Dichtungshalter 29 ausbildet. Ferner verjüngt sich der Außenmantel 12 in dem Bereich, in dem das als Drahtgewebe 33 ausgebildete Dichtungselement 27 angeordnet ist. Somit ist der Innenmantel 9 alternativ oder zusätzlich zu einer solchen Ausformung 13 mittels des Dichtungselements 27 radial am Außenmantel 12 abgestützt.

Fig. 4 zeigt einen Querschnitt durch einen solchen Ring 24. Hierbei ist zu sehen, dass der Ring 24 entlang seines Innenumfanges 35 radial nach innen gerichtete Verbindungsabschnitte 36 aufweist, die der Verbindung des Ringes 24 mit dem Abstützelement 25 dienen. Die Verbindungsabschnitte 36 und somit die zugehörigen Abstützelemente 25 sind dabei in der Umfangsrichtung gleichmäßig verteilt, um eine entsprechend gleichmäßige Abstützung bzw. Verbindung des Ringes 24 am Abstützelement 25 und somit am Deckel 22 zu gewährleisten.

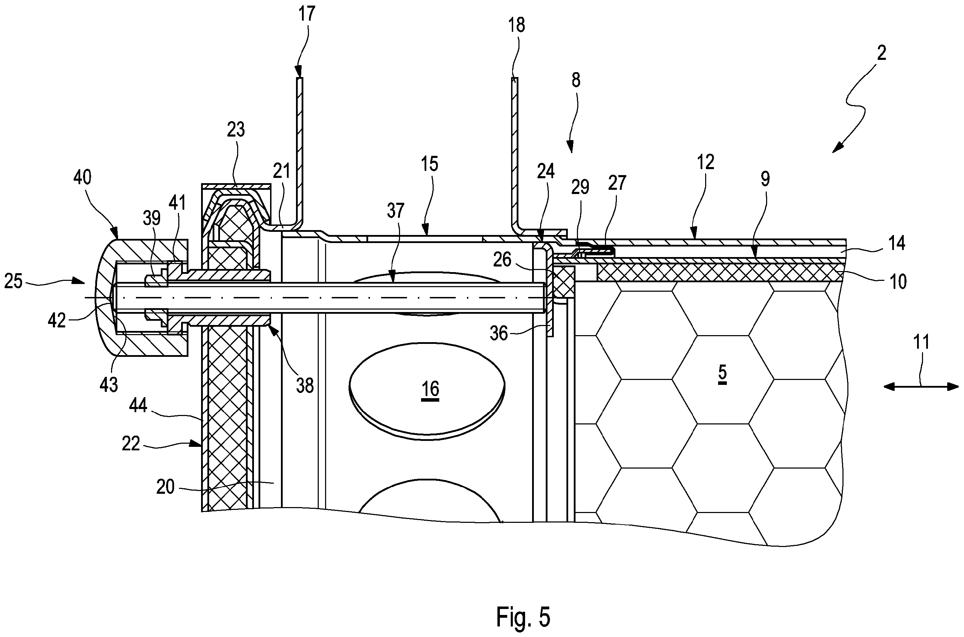

Eine bevorzugte Ausführungsform des Abstützelementes 25 ist in Fig. 5 gezeigt. Das Abstützelement 25 weist eine Gewindestange 37, eine Buchse 38, eine Mutter 39 sowie eine Hutmutter 40 auf. Die Buchse 38 durchsetzt den Deckel 22 und ist fest am Deckel 22 angeordnet und beispielsweise in dem Deckel 22 verpresst oder verschraubt. Die Gewindestange 37 verläuft durch die Buchse 38 und durch das Auslasselement 15 und ist mit dem Ring 24, insbesondere mit einem solchen zugehörigen Verbindungsabschnitt 36 des Ringes 24, verbunden, beispielsweise verschraubt oder verschweißt. Die Mutter 39 ist auf der vom Ring 24 abgewandten Seite der Buchse 38 auf die Gewindestange 37 aufgeschraubt und zudem axial an der Buchse 38 abgestützt. Somit ist es möglich, durch Anziehen der Mutter 39 die Gewindestange 37 und somit den Ring 24 und den Innenmantel 9 sowie das Filterelement 5 aus dem Innenmantel 12 und somit aus dem Gehäuse 4 herauszuziehen. Zur Abstützung des Ringes 24 und somit des Innenmantels 9 bzw. des Filterelements 5 am Deckel 22 zur Übertragung von Druckkräften ist die Hutmutter 40 mittels eines auf der vom Ring 24 abgewandten Seite der Buchse 38 ausgebildeten Außengewindes 41 der Buchse 38 mit der Buchse 38 verschraubt. Die Hutmutter 40 überdeckt dabei die Mutter 39 sowie das vom Ring 24 entfernte freie Ende 42 der Gewindestange 37. Ferner ist das freie Ende 42 der Gewindestange 37 an der Innenseite 43 der Hutmutter 40 axial an der Hutmutter 40 abgestützt. Dementsprechend kann der Ring 24 und somit der Innenmantel 9 und das Filterelement 5 aus dem Außenmantel 12 herausgezogen werden, indem zunächst die Hutmutter 40 abgeschraubt und anschließend die Mutter 39 angeschraubt wird, womit sich die Gewindestange 37 samt Ring 24 und somit Innenmantel 9 und Filterelement 5 axial in Richtung der Montageöffnung 20 bewegen. Anschließend wird die Schelle 23 gelöst und der Deckel 22 von der Montageöffnung 20 entfernt, um den Ring 24 und damit den Innenmantel 9 und das Filterelement 5, insbesondere mit Hilfe der Gewindestange 37, aus dem Innenmantel 12 herauszuziehen.

In Fig. 5 ist ferner zu sehen, dass der Deckel 22 als Hohlkörper ausgebildet ist, indem Isoliermaterial 44 zur thermischen Isolierung und/oder zur Dämpfung von Vibrationen angeordnet ist. Auch die Ausformungen 13 sowie die Lagermatte 10 und das Stützelement 26 können der Dämpfung von Vibrationen dienen.

Zur Überprüfung der Dichtheit des Gehäuses 4 des Partikelfilters 2 ist ferner ein Leckagekanal 45 vorgesehen, das, wie in Fig. 1 zu sehen, den Außenmantel 12 durchsetzt und fluidisch mit dem Hohlraum 14 verbunden ist.

## Patentansprüche

1. Partikelfilter (2) zum Filtern von Abgasen einer Brennkraftmaschine, insbesondere eines Kraftfahrzeuges, mit einem Gehäuse (4), einem Filterelement (5), wobei das Gehäuse eine Montageöffnung (20) aufweist,
wobei,
- der Partikelfilter (2) einen Außenmantel (12) und einen im Außenmantel (12) axial verschiebbar angeordneten Innenmantel (9) aufweist,
- das Gehäuse (4) die von einem Deckel (22) verschlossene Montageöffnung (20) aufweist, durch die der Innenmantel (9) axial in den Außenmantel (12) einsteckbar und aus dem Außenmantel (12) ausziehbar ist,
- das Filterelement (5) im Innenmantel (9) abgestützt ist,
- der Innenmantel (9) radial am Außenmantel (12) abgestützt ist,
- der Innenmantel (9) ausströmseitig des Filterelements (5) an einem Ring (24) anliegt,
- **dadurch gekennzeichnet,**
- **dass** zumindest ein Abstützelement (25) den Ring (24) zur Übertragung von Druckkräften axial am Deckel (22) abstützt,
- **dass** das zumindest eine Abstützelement (25) separat vom Innenmantel (9) ausgebildet ist.

2. Partikelfilter nach Anspruch 1,
**dadurch gekennzeichnet,**
- **dass** das Abstützelement (25) zur Übertragung von Zugkräften am Ring (24) befestigt ist,
- **dass** der Ring (24) fest am Innenmantel (9) angeordnet ist, so dass bei entferntem Deckel (22), der Innenmantel (9) mit dem Filterelement (5) durch Ziehen am Abstützelement (25) aus dem Außenmantel (12) herausziehbar ist.

3. Partikelfilter nach Anspruch 1 oder 2,
**dadurch gekennzeichnet,**
**dass** das Abstützelement (25) eine Gewindestange (37) sowie eine Mutter (39) und eine Hutmutter (40) und eine Buchse (38) umfasst,
wobei
- die Buchse (38) den Deckel (22) durchsetzt und fest am Deckel (22) angeordnet ist,
- die Buchse (38) auf der vom Ring (24) abgewandten Seite ein Außengewinde (41) aufweist,
- die Gewindestange (37) am Ring (24) befestigt ist und durch die Buchse (38) verläuft,
- die Mutter (39) auf der vom Ring (24) abgewandten Seite der Buchse (38) auf die Gewindestange (37) aufgeschraubt ist und axial an der Buchse (38) abgestützt ist,
- die Hutmutter (40) die Mutter (39) und das vom Ring (24) entfernte freie Ende (42) der Gewindestange (37) überdeckt und mittels des Außengewindes (41) mit der Buchse (38) verschraubt ist.

4. Partikelfilter nach Anspruch 3,
**dadurch gekennzeichnet,**
**dass** das freie Ende (42) der Gewindestange (37) an der Innenseite (43) der Hutmutter (40) axial abgestützt ist.

5. Partikelfilter nach einem der Ansprüche 1 bis 4,
**dadurch gekennzeichnet,**
**dass** radial zwischen dem Innenmantel (9) und dem Außenmantel (12) mindestens ein Dichtungselement (27) angeordnet ist.

6. Partikelfilter nach Anspruch 5,
**dadurch gekennzeichnet,**
**dass** zumindest ein solches Dichtungselement (27) eine Sicke (31), aufweist.

7. Partikelfilter nach Anspruch 5 oder 6,
**dadurch gekennzeichnet,**
**dass** zumindest ein solches Dichtungselement (27) ein Drahtgewebe (33) aufweist.

8. Partikelfilter nach einem der Ansprüche 5 bis 7,
**dadurch gekennzeichnet,**
**dass** das Dichtungselement (27) an einem am Innenmantel (9) angeordneten Dichtungshalter (29) gehalten ist.

9. Partikelfilter nach einem der Ansprüche 1 bis 8,
**dadurch gekennzeichnet,**
**dass** der Deckel (22) mittels einer Schelle (23) mit einem die Montageöffnung (20) einfassenden Öffnungsrand (21), der an einer relativ zum Außenmantel (12) radial verlaufenden Außenwand (17) des Gehäuses (4) ausgebildet ist, verbunden ist.

10. Partikelfilter nach einem der Ansprüche 1 bis 9,
**dadurch gekennzeichnet,**
**dass** axial zwischen dem Deckel (22) und dem Ring (24) ein hohlzylindrisches Auslasselement (15) zum radialen Auslassen des axial aus dem Filterelement (5) austretenden Abgases angeordnet ist.

11. Partikelfilter nach Anspruch 10,
**dadurch gekennzeichnet,**
**dass** das Auslasselement (15) integral am Außenmantel (12) ausgebildet ist.

12. Partikelfilter nach Anspruch 10 oder 11,
**dadurch gekennzeichnet,**
**dass** der Ring (24) am Außenmantel (12) und/oder am Auslasselement (15) radial abgestützt und axial verschiebbar ist.

13. Partikelfilter nach einem der Ansprüche 1 bis 12,
**dadurch gekennzeichnet,**
**dass** ein den Außenmantel (12) durchsetzender Leckagekanal (44) zur Überprüfung der Dichtheit des Gehäuses (4) vorgesehen ist.

14. Partikelfilter nach einem der Ansprüche 1 bis 13,
**dadurch gekennzeichnet,**
**dass** zumindest eine radial nach innen gerichtete Ausformung (13) des Außenmantels (12) den Innenmantel (9) radial abstützt.

15. Partikelfilter nach einem der Ansprüche 1 bis 14,
**dadurch gekennzeichnet,**
**dass** der Innenmantel (9) ausstömseitig axial am Ring (24) abgestützt ist.

16. Schalldämpfer (1) für eine Abgasanlage einer Brennkraftmaschine, mit einem Partikelfilter (2) nach einem der vorherigen Ansprüche, wobei das Gehäuse (4) des Partikelfilters (2) durch einen Abschnitt eines Schalldämpfergehäuses (3) des Schalldämpfers (1) gebildet ist.

## Claims

1. A particle filter (2) for filtering exhaust gases of an internal combustion engine, in particular of a motor vehicle, with a housing (4), a filter element (5), wherein the housing comprises an installation opening (20),
wherein
- the particle filter (2) comprises an outer jacket (12) and an inner jacket (9) which is arranged axially displaceably in the outer jacket (12),
- the housing (4) comprises the installation opening (20) closed off by a cover (20), through which the inner jacket (9) can be axially inserted into the outer jacket (12) and can be pulled out of the outer jacket (12),
- the filter element (5) is supported in the inner jacket (9),
- the inner jacket (9) is radially supported on the outer jacket (12),
- the inner jacket (9) contacts a ring (24) on the outflow side of the filter element (5),
**characterized in**
- **that** at least one supporting element (25) axially supports the ring (24) on the cover (22) to transit pressure forces,
- **that** the at least one supporting element (25) is formed separately form the inner jacket (9).

2. The particle filter according to Claim 1, **characterized**
- **in that** the supporting element (25) is fastened on the ring (24) for transmitting pulling forces,
- **in that** the ring (24) is arranged fixed on the inner jacket (9), so that with removed cover (22) the inner jacket (9) with the filter element (5) can be pulled out of the outer jacket (12) by pulling on the supporting element (25).

3. The particle filter according to Claim 1 or 2, **characterized in that** the supporting element (25) comprises a threaded rod (37) and a nut (39) and a cap nut (40) and a bushing (38), wherein
- the bushing (38) penetrates the cover (22) and is arranged fixed on the cover (22),
- the bushing (38) has an outer thread (41) on the side facing away from the ring (24),
- the threaded rod (37) is fastened on the ring (24) and runs through the bushing (38),
- the nut (39) is screwed onto the threaded rod (37) on the side of the bushing (38) facing away from the ring (24) and is axially supported on the bushing (38),
- the cap nut (40) covers the nut (39) and the free end (42) of the threaded rod (37) that is distal from the ring (24) and screwed to the bushing (38) by means of the outer thread (41).

4. The particle filter according to Claim 3, **characterized in that** the free end (42) of the threaded rod (37) is axially supported on the inside (43) of the cap nut (40).

5. The particle filter according to any one of the Claims 1 to 4, **characterized in that** radially between the inner jacket (9) and the outer jacket (12) at least one sealing element (27) is arranged.

6. The particle filter according to Claim 5, **characterized in that** at least one such sealing element (27) comprises a bead (31).

7. The particle filter according to Claim 5 or 6, **characterized in that** at least one such sealing element (27) comprises a wire fabric (33).

8. The particle filter according to any one of the Claims 5 to 7, **characterized in that** the sealing element (27) is held on a seal retainer (29) which is arranged on the inner jacket (9).

9. The particle filter according to any one of the Claims 1 to 8, **characterized in that** the cover (22) is connected by means of a clamp (23) to an opening edge (21) encasing the installation opening (20), which is formed on an outer wall (17) of the housing (4) which runs radially relative to the outer jacket (12).

10. The particle filter according to any one of the Claims 1 to 9, **characterized in that** axially between the cover (22) and the ring (24) a hollow-cylindrical outer element (15) for radially letting out the exhaust gas axially exiting the filter element (5) is arranged.

11. The particle filter according to Claim 10, **characterized in that** the outlet element (15) is integrally formed on the outer jacket (12).

12. The particle filter according to Claim 10 or 11, **characterized in that** the ring (24) is radially supported on the outer jacket (12) and/or on the outlet element (15) and axially displaceable.

13. The particle filter according to any one of the Claims 1 to 12, **characterized in that** a leakage channel (44) penetrating the outer jacket (12) for checking the tightness of the housing (4) is provided.

14. The particle filter according to any one of the Claims 1 to 13, **characterized in that** at least one molding (13) of the outer jacket (12) radially directed to the inside radially supports the inner jacket (9).

15. The particle filter according to any one of Claims 1 to 14, **characterized in that** the inner jacket (9) on the outflow side is axially supported on the ring (24) .

16. A muffler (1) for an exhaust system of an internal combustion engine, with a particle filter (2) according to any one of the preceding claims, wherein the housing (4) of the particle filter (2) is formed by a section of a muffler housing (3) of the muffler (1) .

## Revendications

1. Filtre à particules (2) pour le filtrage de gaz d'échappement d'un moteur à combustion interne, en particulier d'un véhicule automobile, comprenant un boîtier (4), un élément filtrant (5), dans lequel le boîtier présente une ouverture de montage (20), dans lequel :
- le filtre à particules (2) présente une chemise externe (12) et une chemise interne (9) agencée de manière à pouvoir coulisser axialement dans la chemise externe (12),
- le boîtier (4) présente l'ouverture de montage (20) fermée par un couvercle (22), à travers laquelle ouverture la chemise interne (9) peut être enfichée axialement dans la chemise externe (12) et peut être extraite de la chemise externe (12),
- l'élément filtrant (5) est supporté dans la chemise interne (9),
- la chemise interne (9) est supportée radialement dans la chemise externe (12),
- la chemise interne (9) s'appuie sur une couronne (24) côté émission de l'élément filtrant (5),
- **caractérisé en ce que** :
- au moins un élément d'appui (25) supporte la couronne (24) pour transférer les forces de pression axialement sur le couvercle (22),
- l'au moins un élément d'appui (25) est formé séparément de la chemise interne (9).

2. Filtre à particules selon la revendication 1,
**caractérisé en ce que** :
- l'élément d'appui (25) est fixé pour transférer les forces de traction sur la couronne (24),
- la couronne (24) est agencée solidement sur la chemine interne (9) de sorte que, lorsque le couvercle (22) est retiré, la chemise interne (9) avec l'élément filtrant (5) puisse être retirée de la chemise externe (12) par traction sur l'élément d'appui (25).

3. Filtre à particules selon la revendication 1 ou 2,
**caractérisé en ce que** :
l'élément d'appui (25) comprend une tige filetée (37) ainsi qu'un écrou (39) et un écrou borgne (40) et une fourrure (38), dans lequel :
- la fourrure (38) traverse le couvercle (22) et est agencée solidement sur le couvercle (22),
- la fourrure (38) présente un filet externe (41) sur le côté opposé à la couronne (24),
- la tige filetée (37) est fixée sur la couronne (24) et s'étend à travers la fourrure (38),
- l'écrou (39) est vissé sur la tige filetée (37) du côté de la fourrure (38) opposé à la couronne (24) et s'appuie axialement sur la fourrure (38),
- l'écrou borgne (40) recouvre l'écrou (39) et l'extrémité libre (42) de la tige filetée (37) éloignée de la couronne (24) et est vissé à la fourrure (38) au moyen du filet externe (41).

4. Filtre à particules selon la revendication 3,
**caractérisé en ce que** :
l'extrémité libre (42) de la tige filetée (37) s'appuie axialement sur le côté interne (43) de l'écrou borgne (40).

5. Filtre à particules selon l'une quelconque des revendications 1 à 4,
**caractérisé en ce que** :
au moins un élément d'étanchéité (27) est agencé radialement entre la chemise interne (9) et la chemise externe (12).

6. Filtre à particules selon la revendication 5,
**caractérisé en ce que** :
au moins un tel élément d'étanchéité (27) présente une moulure (31).

7. Filtre à particules selon la revendication 5 ou 6,
**caractérisé en ce que** :
au moins un tel élément d'étanchéité (27) présente une toile métallique (33).

8. Filtre à particules selon l'une quelconque des revendications 5 à 7,
**caractérisé en ce que** :
l'élément d'étanchéité (27) est maintenu sur un support d'étanchéité (29) agencé sur la chemise interne (9).

9. Filtre à particules selon l'une quelconque des revendications 1 à 8,
**caractérisé en ce que** :
le couvercle (22) est relié au moyen d'une bride de fixation (23) à un bord d'ouverture (21) entourant l'ouverture de montage (20), lequel bord est formé sur une paroi externe (17) du boîtier (4) s'étendant radialement par rapport à la chemise externe (12).

10. Filtre à particules selon l'une quelconque des revendications 1 à 9,
**caractérisé en ce que** :
un élément de décharge cylindrique creux (15) est agencé axialement entre le couvercle (22) et la couronne (24) pour la décharge radiale des gaz d'échappement sortant axialement de l'élément filtrant (5).

11. Filtre à particules selon la revendication 10,
**caractérisé en ce que** :
l'élément de décharge (15) est formé d'un seul tenant sur la chemise externe (12).

12. Filtre à particules selon la revendication 10 ou 11,
**caractérisé en ce que** :
la couronne (24) s'appuie radialement sur la chemise externe (12) et/ou sur l'élément de décharge (15) et peut coulisser axialement.

13. Filtre à particules selon l'une quelconque des revendications 1 à 12,
**caractérisé en ce que** :
un canal de fuite (44) traversant la chemise externe (12) est prévu pour tester l'étanchéité du boîtier (4).

14. Filtre à particules selon l'une quelconque des revendications 1 à 13,
**caractérisé en ce que** :
au moins une déformation (13) de la chemise externe (12) dirigée radialement vers l'intérieur supporte radialement la chemise interne (9).

15. Filtre à particules selon l'une quelconque des revendications 1 à 14,
**caractérisé en ce que** :
la chemise interne (9) s'appuie axialement sur la couronne (24) côté émission.

16. Silencieux (1) pour une installation de gaz d'échappement d'un moteur à combustion interne comprenant un filtre à particules (2) selon l'une quelconque des revendications précédentes, dans lequel le boîtier (4) du filtre à particules (2) est formé par une section d'un boîtier (3) du silencieux (1).
